# EUROPEAN PATENT APPLICATION

(11) **EP 2 631 465 A1**
(43) Date of publication of application: **28.08.2013**
(21) Application number: 13155612.8
(22) Date of filing: 18.02.2013
(51) Int. Cl.: F02M 63/00, F02M 47/02

(54) **Solenoid valve**

(30) Priority: 24.02.2012 JP 2012038676
(71) Applicant: Nabtesco Corporation, Tokyo 102-0093 (JP)
(72) Inventor: Tsuru, Nobuyuki, Hyogo 651-2413 (JP); Akase, Hiroshi, Hyogo 651-2413 (JP)
(74) Representative: Hedges, Martin Nicholas

(57) **Abstract**

A solenoid valve includes a coil (102) and an armature (80) adapted to be attracted by the coil are housed in a body (70). A valve seat (74) on which a valve part (82) formed integral with the armature is also disposed in the body. A high-pressure path (76) is connected to the valve seat. The high-pressure path is disconnected from a low-pressure path when the valve part rests on the valve seat, and communicates with the low-pressure path when the valve part moves off the valve seat. The valve part moves onto and away from the valve seat when the armature moves as the coil is electrically energized and de-energized. The energizing force of a coil spring 104 urges the valve part to rest on the valve seat. A through-hole (86) is formed in that portion of the valve part which faces the high-pressure path. A sealing member (106, 110) is fitted into the through-hole and is held in place by the body.

## Description

This invention relates to an electromagnetic valve, or solenoid valve, such as one used in fuel injection valves.

Japan Patent Publication No. 2010-174820A discloses an example of a solenoid valve used in a fuel injection valve, in particular, in a fuel injection valve used in a common rail system. As shown in Figure 1, the fuel injection valve disclosed in this publication is formed of components including a nozzle body 2, a needle 3, a holder body 4, an orifice plate 6, and a solenoid unit 8. The nozzle body 2 is coupled by a retaining nut 10 to the lower end portion of the body holder 4 with the orifice plate 6 disposed therebetween. A guide hole 3 is formed in the nozzle body 2 to extend therethrough from the top end surface to the tip end of the nozzle body 2. The needle 3 is disposed in the guide hole 3 in such a manner that it can freely slide in the guide hole 3. An injection port 14 is formed in the tip end of the guide hole 12 through which fuel is injected when the needle 3 moves upward. A high-pressure path 16 is formed in the nozzle body 2. The high-pressure path 16 is a path for guiding highly pressurized fuel through a space between the inner circumferential surface of the guide hole 12 and the outer circumferential surface of the needle 3 to the injection port 14. At a location between the two ends of the guide hole 12, a fuel reservoir 18 is formed by enlarging the inner diameter of the guide hole 12. Although not shown, the upper end of the high-pressure path 16 opens at the top end surface of the nozzle body 2 and is connected to a high-pressure path 20 in the orifice plate 6. The high-pressure path 20 is connected via a high-pressure path 22 in the holder body 4 to a pipe joint 24 disposed at the upper end of the holder body 4. The pipe joint 4 is supplied with high-pressure fuel from a common rail.

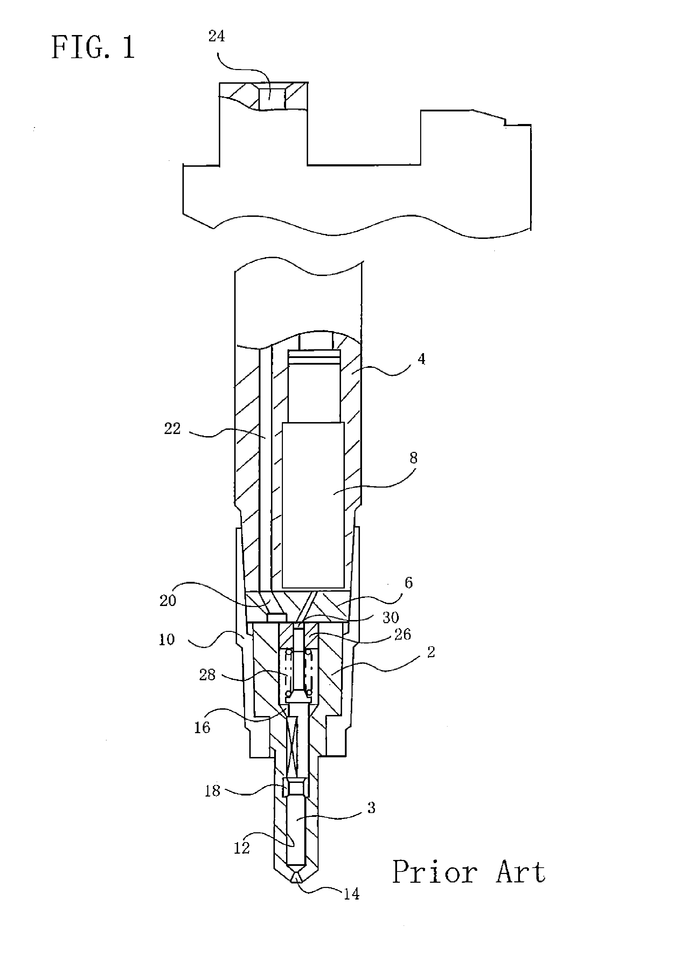

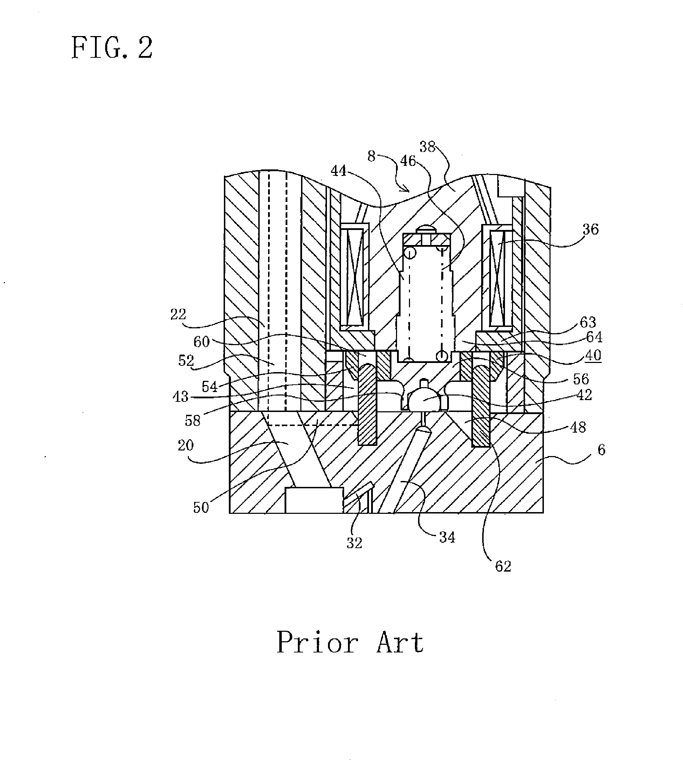

A cylindrical spring pedestal 26 is press-fitted into and secured to the upper end of the guide hole 12, and a spring 28 is disposed between the spring pedestal 26 and the needle 3. The spring 28 urges the needle 3 in the direction to close the valve, or in the downward direction in Fig. 2. The inner circumferential surface of the spring pedestal 26 provides a back-pressure chamber 30 for providing a pressure of high-pressure fuel to the upper end surface of the needle 3 as a back pressure, which also urges the needle 3 in the valve-closing direction. The pressure of the high-pressure fuel in the fuel reservoir 18 urges the needle 3 in the direction to open the valve, or in the upward direction in Fig. 1.

As shown, being enlarged, in Fig. 2, an inlet path 32 through which high-pressure fuel flows from the high-pressure path 20 into the back-pressure chamber 30 and an outlet path 34 through which the high-pressure fuel flows to the low pressure side are formed in the orifice plate 6.

[ The solenoid unit 8 is housed in the holder body 4. The solenoid unit 8 includes a stator 38 having an electromagnetic coil 36 wound on a plastic bobbin, an armature 40 movable relative to the stator 38, and a ball valve 42 movable with the armature 40 to open and close the outlet path 34. The stator 38 has, in its center, a vertically extending spring housing hole 44 in which a spring 46 is housed. The spring 46 presses the armature 40 so that the ball valve 42 is pressed toward the outlet path 34. The space under the stator 38 functions as a valve chest 43 in which the ball valve 42 is housed and which is filled with low-pressure fuel flowing out of the outlet path 34. In the upper surface of the orifice plate 6, an annular groove 48 is formed. A groove 50 extends outward from the annular groove 48, and the low-pressure fuel in the valve chest 43 flows out into a low-pressure path 52 through the groove 50.

The armature 40 has a disc member 54 disposed to face the stator 38 to form a magnetic circuit with the stator 38. A pedestal portion 56 is formed in the center of the disc 54, and an abutting portion 58 extending from the pedestal portion 56 toward the ball valve 42 houses the ball valve 42. A plurality of through-holes 60 are formed through the disc 54, being arranged along a line concentric with the disc 54. Guide pins 62 are inserted into some of the through-holes 60. The guide pins 62 are secured to the orifice plate 6. The through-holes 60 are formed at locations interrupting the magnetic circuit formed by the disc 54 and the stator 38. A magnetic member 63 is disposed beneath the electromagnetic coil 36. The magnetic member 63 is an annular member extending between the outer circumference of the stator 38 and an extension 64 formed in the lower end portion of the stator 38. The magnetic member 63 is in contact with the extension 64.

In a state when power is not being supplied to the electromagnetic coil 36, the outlet path 34 is closed by the ball valve 42, and, therefore, the hydraulic pressure in the back-pressure chamber 30 plus the force given by the spring 28 to urge the needle 3 in the direction to close the valve is larger than the hydraulic pressure in the fuel reservoir 18 acting to urge the needle 3 in the direction to open the valve. Accordingly, the needle 3 closes the injection port 14 so that the fuel is not injected. When power is supplied to the electromagnetic coil 36, magnetic flux is generated around the electromagnetic coil 36, which magnetizes the stator 38 and the armature 40, and the armature 40 is attracted by the stator 38. As a result, armature 40 moves toward the stator 38 against the force of the spring 46, being guided by the guide pins 62. This causes the ball valve 42, receiving the hydraulic pressure in the back-pressure chamber 30, opens the outlet path 34 to release the highly pressurized fuel in the back-pressure chamber 30 into the valve chest 43. Then, the hydraulic pressure in the back-pressure chamber 30 decreases to increase the force to move the needle 3 in the direction to open the valve. This makes the needle 3 to move upward so that the fuel is injected through the injection port 14.

When power is not supplied to the electromagnetic coil 36 of the above-described solenoid valve, the spring 46 must provide force larger than the pressure applied to the ball valve 42 through the outlet path 34, which makes it necessary for the spring 46 to provide large force and to be large in size. As the spring 46 is larger in size, the armature 40 must necessarily be large in size and in mass, resulting in decrease of the valve opening speed. The decrease in valve opening speed is a large problem in applications, e.g. common rail systems, in which electromagnetic valves must operate at high speed.

An object of the present invention is to provide a solenoid valve which can operate at high speed.

According to an aspect of the present invention, a solenoid valve includes a body housing a coil. An armature adapted to be attracted by the armature is disposed in the body. A valve part is formed integral with the armature. Also, a valve seat is provided in the body on which the valve part is adapted to rest. A high-pressure path is connected to the valve seat. The high-pressure path is connected to a back-pressure chamber, for example, like that of the solenoid valve disclosed in the prior art literature discussed above. When the valve part rests on the valve seat, a low-pressure path, through which a fluid, or more specifically, a liquid flows from the high-pressure path, is disconnected from the high-pressure path, and when the valve part moves away from the valve seat, the high-pressure path and the low-pressure path communicate with each other. The valve part moves to rest on and away from the valve seat as the armature moves in response to energization and de-energization of the coil. It is desirable for the valve part to move to rest on the valve seat by being energized with force provided by elastic means, e.g. a spring, disposed on the side of the valve part opposite to the high-pressure path. A through-hole extends in a direction in which the armature moves is formed in a portion of said valve part facing said high-pressure path, A sealing member is disposed within the through-hole and held in place by the body. It is desirable that the gap between the sealing member and the through-hole be determined such that the movement of the armature is not impeded and the leakage is as small as possible. The armature slides on the sealing member when it moves between the position where the valve part rests on the valve seat and the position where the valve part moves off the valve seat.

Due to the through-hole formed through the armature of the solenoid valve with the above-described arrangement, the pressure receiving area of the armature onto which the high-pressure fluid from the high-pressure path acts can be smaller by the cross-sectional area of the through-hole. This can make it possible to use small-sized elastic means providing a smaller energizing force. This, in turn, makes it possible to use a smaller armature corresponding to the smaller energizing force. As a result, the speed of the valve part when it moves off the valve seat, i.e. the valve opening speed, can be higher. It should be noted that the pressure given by the high-pressure fluid within the through-hole is applied to the sealing member, but, since the sealing member is held in place by the valve body, it never happens that the sealing member moves.

The sealing member may be secured to the body. In such case, the sealing member supports the armature in such a manner as to be able to move between the position where the valve part rests on the valve seat and the position where the valve part is off the valve seat. In other words, the sealing member guides the armature.

With this arrangement, since the sealing member functions as a guide, there is no need for separately providing a guide as is done in the above-discussed. Japan Patent Publication No. 2010-174820A, which results in reduction of the number of parts of the solenoid valve.

A cylindrical member may be disposed contiguous to the through-hole. The cylindrical member may desirably surround the sealing member and extend in the direction opposite to the high-pressure path.

The cylindrical member reduce leakage of the fluid supplied from the high-pressure path through the gap between the sealing member and the through-hole. In addition, it can reduce influence of the high-pressure fluid in the high-pressure path on the armature to tilt the armature.
Fig. 1 is a side view of a fuel injection valve using a prior solenoid valve with part thereof omitted.
Fig. 2 is an enlarged cross-sectional view of the fuel injection valve of Fig. 1 with part thereof omitted.
Fig. 3 is a longitudinal cross-sectional view of part of a solenoid valve according to a first embodiment of the present invention.
Fig. 4A is a transverse cross-sectional view of an armature used in the solenoid valve shown in Fig. 3
Fig. 4B is a longitudinal cross-sectional view of the armature used in the solenoid valve of Fig. 3.
Fig. 5 is a longitudinal cross-sectional view of the remainder of the solenoid valve according to the first embodiment of the present invention.
Fig. 6 is a longitudinal cross-sectional view of a solenoid valve according to a second embodiment of the present invention, with part thereof omitted.

Like the aforementioned prior art technology, the solenoid valve according to a first embodiment of the present invention is used in a fuel injection valve for use in a common rail system. The solenoid valve operates in such a manner that an armature of the solenoid valve is moved when electric energy is supplied to a coil of the solenoid valve, which permits a pressurized fluid to flow to a low-pressure path. This causes a nozzle closing an injection port to go up, to thereby make the highly pressurized fuel be supplied through the injection port into a cylinder of a diesel engine.

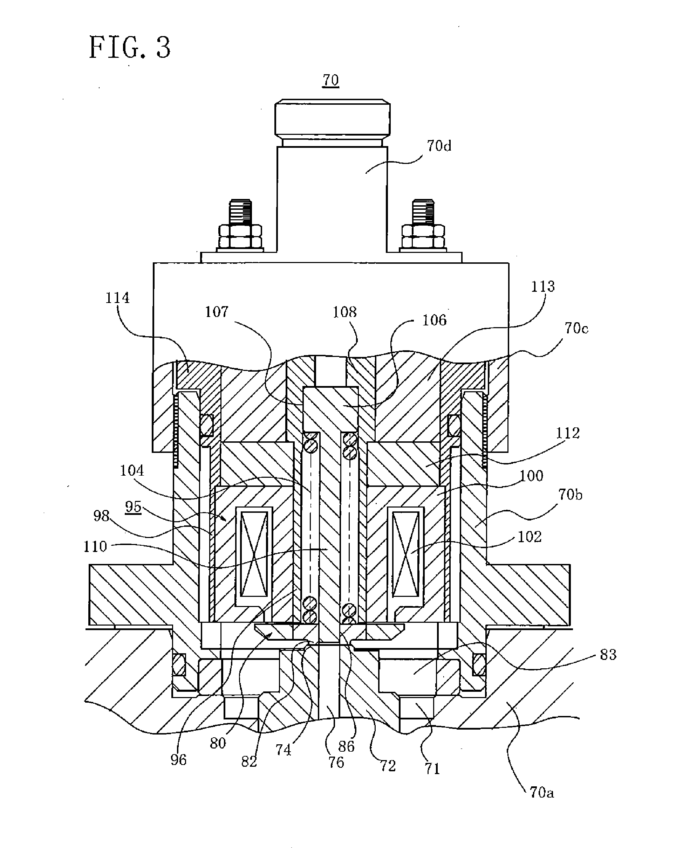

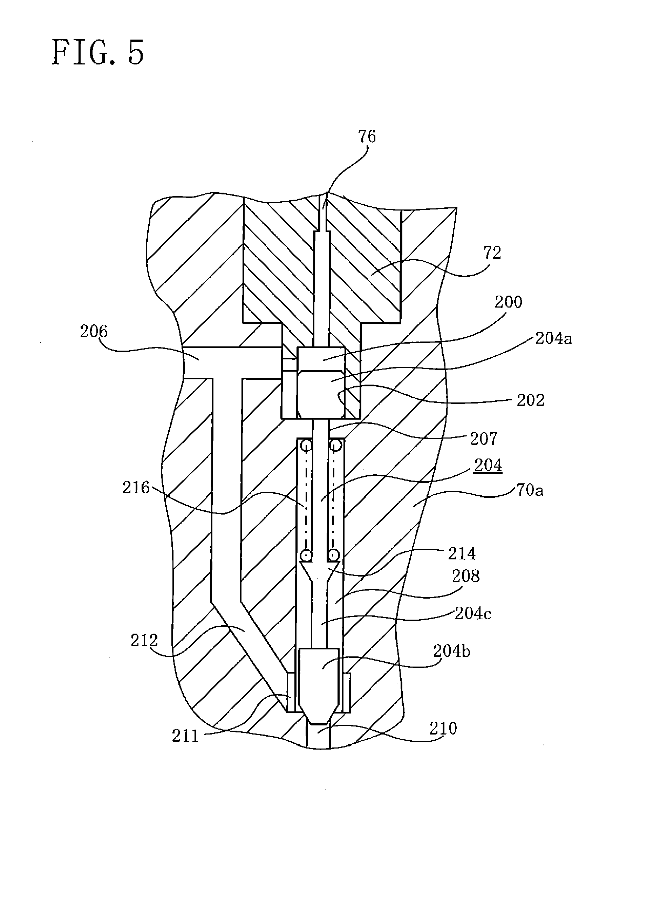

As shown in Fig. 3, the solenoid valve according to the first embodiment has a body 70. The body 70 is formed of parts including a base 70a, a trunk 70b, a coupling part 70c and a head 70d. A valve seat providing part 72 is disposed in a depression 71 formed in the central portion of the upper surface of the base 70a. A valve seat 74 is formed in the center of one end, the upper end in Fig. 3, of the valve seat providing part 72. A high-pressure path 76 is formed to extend from the valve seat 74 through the valve seat providing part 72. High-pressure fluid or fuel is supplied to the high-pressure path 76 from a back-pressure chamber 200 disposed beneath the valve seat providing part 72 as shown in Fig. 5.

An upper end portion 204a of a nozzle 204 is positioned in a depression 202 formed beneath the valve seat providing part 72. The back-pressure chamber 200 is formed between the upper end portion 204a of the nozzle 204 and the high-pressure path 76. The high-pressure fuel is supplied to the back-pressure chamber 200 through a high-pressure path 206 formed in the base 70 to thereby apply back-pressure to the nozzle 204. The high-pressure path 206 receives the high-pressure fuel from a common rail. The base 70a has a path 208 formed therein to extend downward in Fig. 5. The path 208 is in communication with the depression 202 through a guide hole 207. At the lower end of the path 208, a fuel injection port 210 is formed. The fuel injection port 210 is adapted to be closed by the tip end 204b of the nozzle 204. A fuel reserve chamber 211 is formed to surround the lower, tip end 204b. The fuel reserve chamber 211 is connected through a high-pressure path 212 formed in the base 70a to the high-pressure path 206. The upper end 204a and lower end 204b of the nozzle 204 are connected together by a guide 204c. The guide 204c is guided by the guide hole 207 vertically or in the upward and downward directions in Fig. 5. Elastic means, e.g. a spring coil 216, is disposed between a spring seat 214 formed at an intermediate location on the guide 204c and the upper end of the path 208. The spring coil 216 urges the nozzle 204 in the closing direction to close the fuel injection port 210, i.e. downward in Fig. 5. The nozzle 204 is urged in the closing direction also by the back-pressure in the back-pressure chamber 200. The nozzle 204 receives the force in the opening direction to open the fuel injection port 210, i.e. upward in Fig. 5, from the high-pressure fuel in the fuel reserve chamber 211. The fuel injection port closing force, which is the sum of the force provided by the spring coil 21 and the force based on the back-pressure, is larger than the fuel injection port opening force provided by the high-pressure fuel in the fuel reserve chamber 210, and, therefore the nozzle 204 closes the fuel injection port 210. However, when the back-pressure in the back-pressure chamber 200 is lost, the opening force becomes larger than the closing force, and the nozzle 204 opens the fuel injection port 210.

In Fig. 3, an armature 80 is disposed above the valve seat 74 in such a manner that it is concentric with the high-pressure path 76. A valve part 82 formed at, for example, the center of the lower surface of the armature 80 is adapted to be seated on the valve seat 74 to close the valve. The armature 80 is movable up and down in the vertical direction in Fig. 3, as described later, and, when it moves upward, the valve part 82 moves off the valve seat 74 to thereby the valve is open. The trunk 70b is fitted into the depression 71 in the base 70a in such a manner that it surrounds the valve seat providing part 72, whereby a low-pressure path 83 is formed around the valve seat providing part 72. The low-pressure path 83 communicates with the exterior of the base 70a. When the valve part 82 moves off the valve seat 74, the high-pressure fuel, which has flowed from the back-pressure chamber 200 into the high-pressure path 76, flows out through the valve seat 74 into the low-pressure path 83. The fuel flowing into the low-pressure path 83 flows out to the exterior through a path (no shown). Then, as described before, the nozzle 204 closing the fuel injection port 210 moves upward and the high-pressure fuel is injected through the fuel injection port 210 into the cylinder of the diesel engine.

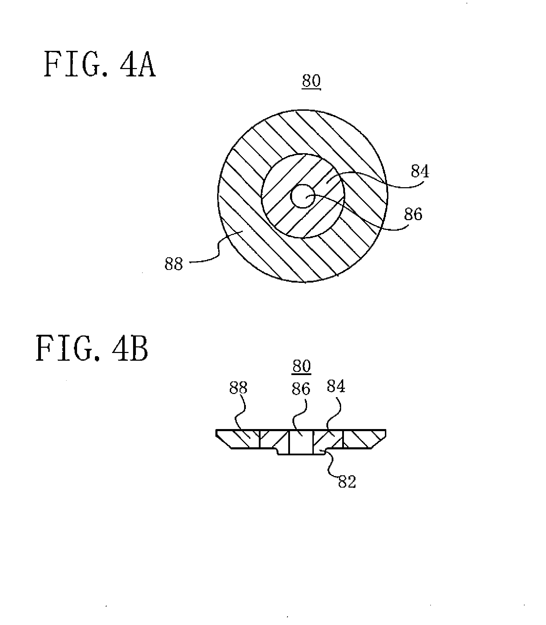

As shown in Figs. 4A and 4B, the armature 80 has a disc-shaped high-strength portion 84 at its center. The valve part 82 is formed in the center portion of the lower surface of the high-strength portion 84. The high-strength portion 84 is made of a material having a relatively high strength, e.g. steel and titanium. In the center of the high-strength portion 84, a through-hole 86 is formed to extend vertically, in terms of the illustration Fig. 3, through the high-strength portion 84. The diameter of the through-hole 86 is substantially the same as that of the through-hole 76. A magnetic portion 88 is formed to surround the high-strength portion 84. The magnetic portion 88 is formed of a magnetic material, e.g. pressed magnetic material powder, of a ring-shape. The magnetic portion 88 is fitted over the high-strength portion 84 in such a manner that its inner peripheral surface is in surface contact with the outer peripheral surface of the high-strength portion 84.

As shown in Fig. 3, a stator 95 is disposed above the armature 80 within the trunk 70b of the body 70. The stator 95 has an inner cylindrical part 96. The lower end of the inner cylindrical part 96 is located above the high-strength portion 84 (Figs. 4A and 4B) of the armature 80 with a predetermined spacing disposed therebetween when the armature 80 is resting on the valve seat 74. The inner cylindrical part 96 is concentric with the high-pressure path 76. An outer cylindrical part 98 concentric with the inner cylindrical part 96 is located near the inner peripheral surface of the trunk 70b, being spaced from the inner cylindrical part 96. A core 100 is disposed between the inner cylindrical part 96 and the outer cylindrical part 98. The core 100 has its lower end surface located above the armature 80, being spaced by a predetermined distance, when the armature 80 is resting on the valve seat 74. A coil 102 is wound around the core 100. The coil 102 is also disposed concentric with the high-pressure path 76 with its center portion facing the high-pressure path 76.

When the coil 102 is electrically energized, the magnetic flux produced by the coil 102 magnetizes the core 100. With the magnetization of the core 100, the armature 80 is also magnetized, which causes the armature 80 to move toward the core 100. As a result, the valve part 82 moves away from the valve seat 74. As described above, the center portion of the coil 102 faces the high-pressure path 76. The magnetic flux in this center portion is little, and, therefore the presence of the through-hole 86 in the center portion of the armature 80 facing the center portion of the coil 102 influences the attractive force of the core 100 and the coil 102 little.

Elastic means, e.g. a coil spring 104 is disposed within the inner cylindrical part 96. The coil spring 104 has its one end contacting the upper surface of the high-strength portion 84 of the armature 80 and has the other end resting on a spring seat 106. The coil spring 104 is compressed against its spring force when the armature 80 rises as the coil 102 is electrically energized. When the electrical energization of the coil 102 is interrupted, the coil spring 104 lowers the armature 80 onto the valve seat 74 by virtue of its spring force against the pressure applied to the lower surface of the armature 80.

The spring seat 106 is pressed against and fixed on a shoulder 107 by the energizing force, e.g. spring force, of the coil spring 104. The shoulder 107 is formed in a portion of a cylindrical block 108 where it joins the upper end of the inner cylindrical part 96. The cylindrical block 108 is continuous to the head 70b of the body 70. A guide rod 110 extends from the lower surface of the spring seat 106 through the inner space of the coil spring 104 into the through-hole 86 in the armature 80. The outer peripheral surface of the lower end of the guide rod 110 is in contact with the inner peripheral surface of the through-hole 86. The guide rod 110 functions as a guide for the armature 80 when the armature 80 moves upward and downward. When the valve part 82 is resting on the valve seat 74, the lower end of the guide rod 110 remains in the through-hole 86 in the armature 80. Accordingly, it does not happen that the guide rod 110 blocks the high-pressure path 76, and the guide rod 110 resting in the through-hole 86 receives the pressure of the high-pressure fuel in the high-pressure path 76. The spring seat 106 and the guide rod 110 provide a sealing member. Cylindrical blocks 112 and 113 are disposed to surround the inner cylindrical part 96 and the cylindrical block 108, respectively. Also, a cylindrical block 114 is disposed to be continuous to the outer cylindrical part 98.

The solenoid valve with the above-described arrangement operates as follows. When electric power is applied to the coil 102, the armature 80 moves upward, being guided by the guide rod 110, against the spring force of the coil spring 104. This causes the valve part 82 to move away the valve seat 74, and the high-pressure fuel in the back-pressure chamber 200 flows out into the low-pressure path 83, resulting in upward movement of the nozzle 204 which has closed the fuel injection port 210. This causes the high-pressure fuel to be supplied to the cylinder of the diesel engine through the fuel injection port 210. Disconnection of the electric power from the coil 102 causes the armature 80 to move downward by virtue of the spring force of the coil spring 104.

Because of the through-hole 86 formed in the armature 80 and of the guide rod 110 inserted into the through-hole 86, the area of the armature 80 receiving the pressure from the high-pressure fuel from the high-pressure path 76 is smaller by the amount corresponding to the cross-sectional area of the through-hole 86. Accordingly, a smaller coil spring providing a smaller spring force can be used as the coil spring 104 used to move the armature 80 downward. Furthermore, the armature 80 can be smaller in size and weight. The pressure of the high-pressure fuel is applied also to the guide rod 110 inserted into the through-hole 86 which is formed in the armature 80 to reduce the area of the armature 80 receiving the pressure from the high-pressure fuel. However, since the guide rod 110 is integral with the spring seat 106 which, in turn, is fixed on the cylindrical block 108, no problem is caused. Furthermore, since the guide is provided by the guide rod 110 and the through-hole 86, there is no need to provide a separate guide for guiding the armature 80. Because of the through-hole 86 in the armature 80, the weight of the armature 80 is smaller by the mass corresponding to the through-hole 86. Also, the presence of the through-hole 86 reduces the amount of the fuel that the armature 80 pushes. By using a larger valve seat for the valve seat 74 and, at the same time, using a larger through-hole for the through-hole 86, the aperture area of the through-hole 86 can be larger relative to the area of the armature 80 receiving the pressure from the high-pressure fuel, so that a larger fuel flow rate can be achieved. Accordingly, the solenoid valve can be smaller relative to the fuel flow rate, and, therefore, the response of the solenoid valve can be improved.

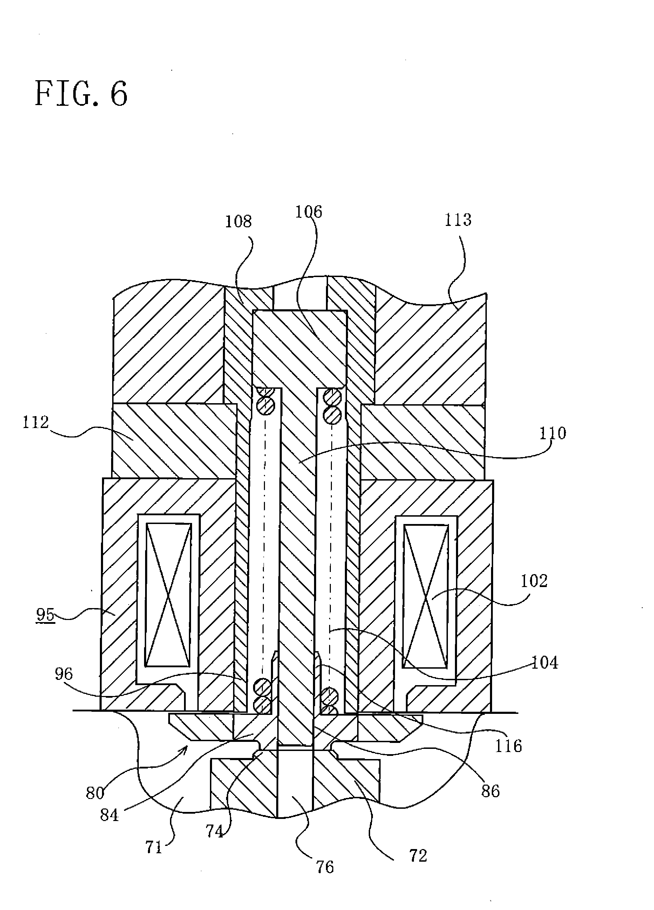

A solenoid valve according to a second embodiment of the present invention is shown in Fig. 6. According to the second embodiment, a tubular member, e.g. a cylindrical member 116 is formed integral with the armature 80. The cylindrical member 116 extends upward from the upper surface of the armature 80 shown in Fig. 5 along the periphery of the through-hole 86. The inner surface of the cylindrical member 116 is in contact with the outer peripheral surface of the guide rod 110. The remainder of the solenoid valve of this embodiment is the same as the solenoid valve according to the first embodiment. Therefore the same reference numerals are used for the components equivalent to those of the solenoid valve of the first embodiment, and their description is not given.

With this arrangement, the amount of fluid leaking through the gap between the guide rod 110 and the through-hole in the armature 80 can be reduced. Further, the cylindrical member 116 makes the armature 80 little tilt when it moves up and down.

The present invention has been described as being embodied in a fuel injection valve in a common rail system, but it is not limited to them. The invention is applicable to any other valves which, when opened, flows high-pressure fluid to a low-pressure side. According to the described embodiments, the spring seat 106 is fixed on the cylindrical block 108 by the spring force of the coil spring 104, but, instead, the outer peripheral surface of the spring seat 106 may be provided with a thread which can mate with a thread formed on the inner peripheral surface of the cylindrical block 108, whereby the spring seat 106 is secured to the cylindrical block 108 without resort to spring force.

## Claims

1. A solenoid valve comprising:
a body;
a coil housed in said body;
an armature adapted to be attracted by said coil;
a valve part formed integral with said armature; and
a valve seat on which said valve part is adapted to rest;
in which a high-pressure path is adapted to be connected to said valve seat, and, when said valve part rests on said valve seat, said high-pressure path is disconnected from a low-pressure path, said high-pressure path being brought into communication with said low-pressure path when said valve part moves away from said valve seat;
wherein a through-hole extending in a direction in which said armature moves is formed in a portion of said valve part facing said high-pressure path, a sealing member being placed in said through-hole, said sealing member being held in place by said body;
said armature is adapted to slide on said sealing member between a position where said valve part rests on said valve seat and a position where said valve part is away from said valve seat.

2. The solenoid valve according to Claim 1 wherein:
said sealing member is secured in place to said body; and
said sealing member supports said armature in such a manner that said armature can move between the position where said valve part rests on said valve seat and the position where said valve part is away from said valve seat.

3. The solenoid valve according to Claim 1 or 2, wherein a cylindrical member is formed integral with said armature, said cylindrical member extending from the periphery of said through-hole.
